# EUROPEAN PATENT APPLICATION

(11) **EP 1 987 936 A1**
(43) Date of publication of application: **05.11.2008**
(21) Application number: 06708866.6
(22) Date of filing: 03.02.2006
(51) Int. Cl.: B29C 45/04

(54) **APPARATUS AND METHOD FOR THE PRODUCTION OF BIMATERIAL HOLLOW BODIES BY MEANS OF INJECTION OVERMOULDING**

(71) Applicant: Industrial de Moldes Y Matrices SA, 08110 Montcada I Reixac (Barcelona) (ES)
(72) Inventor: ATANCE ORDEN, Angel, E-08110 Montcada I Reixac (Barcelona) (ES); VIRON, Alain, F-45390 Desmont (FR)
(74) Representative: Gislon, Gabriele
(86) International application number: PCT/ES2006/000047
(87) International publication number: WO 2007/090904

(57) **Abstract**

The invention relates to an apparatus and method for the production of bimaterial hollow bodies by means of injection overmoulding. The apparatus includes: a number n of base moulding cavities (1) or groups of base moulding cavities (1) inserted between a number n+1 of overmoulding cavities (2a, 2b) or groups of overmoulding cavities (2a, 2b) or vice versa; and a number 2n of cores (3) or groups of cores (3) which are fixed to a core holder plate (32) that is mounted such that it can move in a transverse direction (DT) on a base plate (30) that is actuated to move in a longitudinal direction (DL) in order alternately to insert each core (3) into one of the base moulding cavities (1), so as to mould a first layer, and into one of the overmoulding cavities (2a, 2b), so as to overmould a second layer. The apparatus also includes ejecting means for ejecting the finished bimaterial hollow bodies (P) and valve means (21) for alternately distributing the moulding material to one or the other of the outer cavities.

## Description

### Technical Field

The present invention generally relates to an apparatus and a method for the production of bimaterial hollow bodies by means of injection overmoulding, and more particularly for the production of bimaterial pre-forms by means of injection overmoulding.

### State of Prior Art

The production of bimaterial plastic parts has been a widespread technique for many years. The field of application is very broad, encompassing technical parts, for example, for automobiles, electronics, household appliances, etc., articles for the cosmetics, perfume, personal care industry, etc. Likewise, the type of raw materials, i.e., plastic resins, used is quite varied, and the purpose of using this technique can be for aesthetics, for example, providing parts of several colours, technical, for example, providing different technical properties specific for different areas of the part, or economical, for example, manufacturing a substantial area of the part with an economic material and other areas with a quality material, for example, to provide desired finishes or to comply with a predetermined sanitary condition.

Producing hollow bodies of plastic material is known, which bodies are herein generally referred to as "bimaterial hollow bodies", formed by a base layer and a coating layer of different plastic materials. These bimaterial hollow bodies include, for example, recipients such as vessels, containers, jars, etc., lids and caps for recipients, and parts for household appliances and vehicles.

Several methods for the production of bimaterial plastic parts are known, the main methods being the following.

Overmoulding by means of insert transport. The insert, i.e., the part formed by the first layer of base moulding material, is transported from a base moulding cavity in which it has been injected to another overmoulding cavity in which the coating layer will be injected. This transport can be carried out manually or robotically. The base moulding cavities and the overmoulding cavities can be in two different moulds mounted in two different injector presses or in one and the same double mould.

Overmoulding by means of half-mould rotation. This system allows overmoulding the parts without previously extracting them from their initial mould. The parts are retained in the half-mould (usually on the ejecting side), the half-mould performs a rotation, generally 180°, and the position of the parts that are then overmoulded in the overmoulding cavities is inverted.

Overmoulding by core displacement (also called core-back system). A core acts as a valve to separate the base moulding cavities from the overmoulding cavities. First the base layer is moulded in a base moulding cavity, then the core opens the passage to the overmoulding cavity.

Coinjection. The two different materials are moulded inside the same moulding cavity. The system is based on making the second material pass through the first one to create several layers of different materials.

A particularly important group of bimaterial hollow bodies is the group of pre-forms for the production of bottles and other recipients. These pre-forms consist of hollow bodies of plastic material in the form of a test tube provided with a mouth and a neck, which optionally includes an external threading and a perimetric ring-shaped flange. The pre-forms are intended for the later production of plastic bottles by blowing the part in the form of a test tube inside a blow shaping mould, in which process the neck and the mouth are unaltered. The production of bimaterial pre-forms can be carried out by several of the techniques mentioned above, for example, by overmoulding by means of transporting the insert, overmoulding by means of half-mould rotation, or coinjection. However, each of these techniques has drawbacks and/or limitations.

In the technique of overmoulding by transporting the insert, when the insert is extracted from the base moulding cavity, the recently moulded base layer forming it is very hot and therefore in a soft state, which involves a risk of undergoing deformation or other damages during transport to the overmoulding cavity. Furthermore, the equipment for applying this technique is complex and expensive, and requires a large availability of space given that it generally comprises using two moulds, two injector presses, and a robot or other transport means.

In the technique of overmoulding by means of half-mould rotation, the base moulding and overmoulding cavities are located symmetrically in relation to an axis of rotation of the mould. Accordingly, both injection steps must be inscribed in the surface of the injector press limited by the 4 columns of the press. For this reason, the size of the press must be enormous or the number of cavities of the mould very limited. Furthermore, the coolant fluid of the mould, which in the technique of bimaterial injection must be abundant, must pass through a rotary joint, which additionally limits the capacity of the system. In addition, the pre-forms must be ejected in a displaced manner, and since the necessary force is very important, the ejecting system tends to be decompensated.

In the technique of coinjection, which is currently widely used, the layer of overmoulding material cannot be perfectly delimited, whereby the final geometry of the base layer and the coating layer formed by different materials cannot be controlled exactly. This limitation, even though it allows the technique to be used for applying barrier layers, does not make it suitable for the use of recycled materials in combination with quality materials nor for generating aesthetic bicolour motifs by means of moulding and overmoulding two materials of different colours.

In another order of things, international patent application PCT 2006/ES 00001, belonging to one of the inventors of this invention, describes an apparatus for injection moulding of pre-forms comprising a number n of rows of moulding cavities alternately interposed between a number n+1 of rows of cooling cavities, and a number 2n of rows of cores fixed to a core plate adapted and actuated to be moved over the base plate in a transverse direction between two positions, in which the cores are aligned respectively with first and second sets of cavities. Each of said first and second sets of cavities is formed by said number n of rows of moulding cavities and a number n of the rows of cooling cavities including one or the other of the end rows of cooling cavities, respectively. The base plate is actuated such that it can move in a transverse direction between a closed position, in which the cores are introduced in said first or second sets of cavities, and an open position, in which the cores are extracted from the first or second sets of cavities. Each core has associated thereto an ejecting element configured to define a part of the mould of the pre-form and actuated to perform a transverse movement along the core and thereby eject the pre-form. The ejecting elements are placed in several rows, each associated to one of the rows of cores. The ejecting elements of each row are connected to an ejecting plate, and the different ejecting plates are actuated independently by means of selecting elements to eject the pre-forms only from those rows of cores which have been extracted from rows of cooling cavities.

In this apparatus, the alternating movement of the core plate in combination with the movements of the base plate allows, in one position of the cores in relation to the moulding and cooling cavities, injecting moulding material in the moulding cavities of pre-forms while at the same time other previously injected pre-forms are cooled in the cooling cavities, and subsequently, inverting the positions of the cores in relation to the moulding and cooling cavities, after ejecting the cooled pre-forms, to inject new pre-forms on the recently released cores and simultaneously cooling the pre-forms recently injected in the previous position, and so on cyclically.

### Disclosure of the Invention

According to a first aspect, the present invention provides an apparatus according to claim 1. Other features of the apparatus of this first aspect are specified in dependent claims 2 to 8.

According to a second aspect, the present invention provides a method according to claim 9, suitable for being carried out by means of an apparatus according to any one of claims 1 to 8. Other features of the method of this second aspect are specified in dependent claims 10 and 11.

According to a third aspect, the present invention provides an apparatus according to claim 12. Other features of the apparatus of this first aspect are specified in dependent claims 13 to 19.

According to a fourth aspect, the present invention provides a method according to claim 20, suitable for being carried out by means of an apparatus according to any one of claims 12 to 19. Other features of the method of this fourth aspect are specified in dependent claims 21 and 22.

The apparatuses of the first and third aspects of the invention are based on the mechanical operation of the apparatus described in the mentioned international patent application PCT 2006/ES 00001, with the inclusion of a number of modifications whereby it is possible to alternate consecutive moulding operations of a first layer of a base moulding material and overmoulding operations of a second layer of a coating material to form bimaterial hollow bodies instead of the known alternating moulding and cooling operations. With this construction, the apparatuses of the invention generally allow producing bimaterial hollow bodies, and particularly bimaterial pre-forms, using a single mould and a single injection press. The apparatuses operate with a minimum transport of the cores, taking the first layer of base material from the base moulding cavities to the overmoulding cavities, which reduces or substantially eliminates the risk of damages in said layer of base material, with a relatively small space requirement for a large number of cavities in one and the same mould, and with a high productivity.

The methods of the second and fourth aspects of the invention detail the steps to follow for the production of bimaterial hollow bodies by means of such apparatuses.

All this makes it economically feasible to produce, with the apparatus and method of the present invention, bimaterial hollow bodies for applications which, until now, with the known techniques, were unfeasible. For example, pre-forms adapted for making containers with a barrier property against a gas or light can be easily produced with the new apparatus and method by moulding a first base layer of barrier material of a suitable thickness and overmoulding an outer coating layer of a material suitable to give the outer appearance of the container, which can be, for example, either virgin or recovered PET.

According to another application, with the apparatus and method of the invention it is possible to produce pre-forms including the use of a recovered material, either recycled or directly crushed into flakes. In this case, and assuming that the pre-form is provided for making a food product container, the inner surface of the pre-form including the open end corresponding to the mouth of the container, can be made with a base layer of a quality material suited for food use, for example virgin PET, and the outer coating layer can be overmoulded with a more economical material, for example recovered or recycled PET. The percentage of each of the two components is variable, being able to incorporate 50% of each by way of an application example. It is thus assured that the content of the container is in contact only with the suitable material, whereas the coating layer serves to provide structure to the container. This application does not reduce the quality of the container, and it can substantially reduce the cost of the product, since the raw material represents the most important cost of the final value of the pre-form. In addition to the economic advantage, the use of recovered material involves a huge advantage from the ecological point of view, since it allows the reuse and recovery of waste material.

Another application made possible by the apparatus and method of the invention is the production of bicolour pre-forms, mainly intended for providing an aesthetic value to the container, since with containers with a base colour and a second colour in the form of lines, bands or gradual fadings can be produced with them. To that end, for example, the base layer forming the inner surface of the pre-form including the open end corresponding to the mouth of the container is first moulded with a material of a first colour, and then the coating layer is overmoulded with a material of a second colour, generating the desired shapes. The design and the shapes of these colourings can generate a multitude of combinations, thereby it can have a very broad field of use.

In all cases, as a result of the consecutive base moulding and overmoulding steps, the base layer and the coating layer are accurately delimited, whereby preventing the problems of inaccuracies existing with the technique of coinjection explained above. In some cases, the selection of the moulding and overmoulding materials, as well as their injection conditions, allows producing bimaterial hollow bodies or containers obtained by blowing bimaterial pre-forms in which the two layers tend to separate from one another when they are subjected to certain mechanical deformations, for example, squeezing, thereby facilitating the separate recovery of the two materials at the end of the useful life of the object.

### Brief Description of the Drawings

The previous and other advantages and features will be fully understood from the following detailed description of exemplary embodiments with reference to the attached drawings, in which:
Figure 1 is a diagrammatic longitudinal section view of an apparatus for the production of bimaterial hollow bodies by means of injection overmoulding according to an embodiment of the invention;
Figure 2 is a diagrammatic longitudinal section view of an apparatus for the production of bimaterial hollow bodies by means of injection overmoulding according to another embodiment of the invention;
Figure 3 is a longitudinal section view of an example of a bimaterial hollow body obtained by means of the apparatus of Figure 1;
Figure 4 is a longitudinal section view of an example of a bimaterial hollow body obtained by means of the apparatus of Figure 2;
Figure 5 is a diagrammatic longitudinal section view of an apparatus according to another embodiment of the invention derived from the embodiment of Figure 1;
Figure 6 is a diagrammatic longitudinal section view of a fixed part of an apparatus according to another embodiment of the invention derived from the embodiment of Figure 2, including an alternative for valve means;
Figure 7 is a front view of a fixed part of an apparatus according to a variant of the embodiment of Figure 5;
Figure 8 is a front view of a mobile part of the apparatus of Figure 7;
Figure 9 is a longitudinal section view of another bimaterial hollow body obtainable by means of an apparatus of the invention.
Figure 10 is a diagrammatic longitudinal section view of an apparatus for the production of bimaterial hollow bodies by means of injection overmoulding according to yet another embodiment of the invention;
Figure 11 is a longitudinal section view of an example of a bimaterial hollow body obtained by means of the apparatus of Figure 10, where an end of the core and an ejecting element associated thereto are also shown;
Figure 12 is a cross-section view of a base moulding cavity according to another embodiment of the apparatus of the invention, with a core inserted in the base moulding cavity and a first layer of a hollow body moulded in the mould formed between both;
Figure 13 is a cross-section view of an overmoulding cavity according to the embodiment of Figure 12 with the core inserted therein and a second layer moulded on said first layer to form a finished hollow body; and
Figure 14 is a partially sectioned perspective view of a bimaterial hollow body obtainable by means of the apparatus of the Figures 12 and 13.

### Detailed Description of Exemplary Embodiments

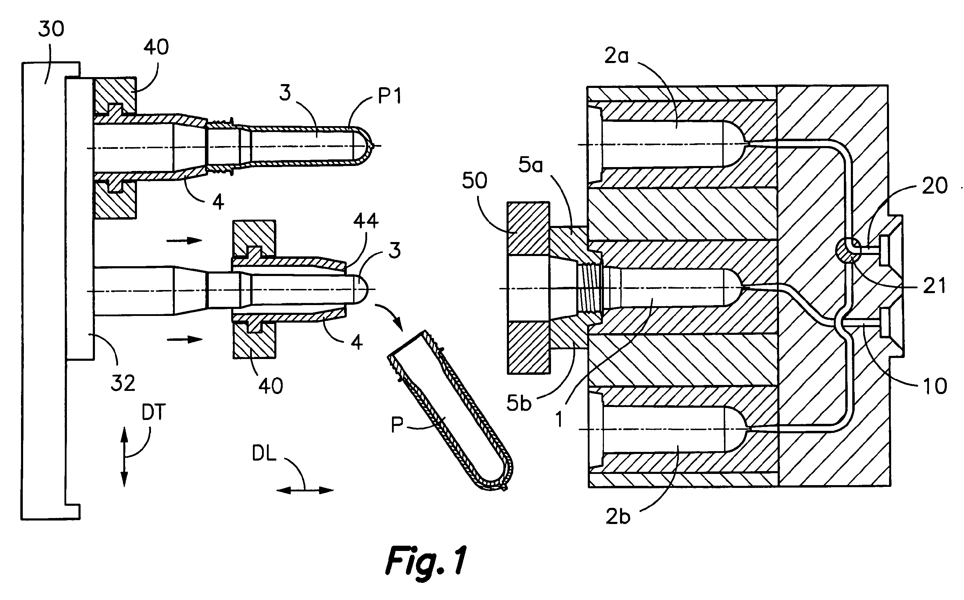

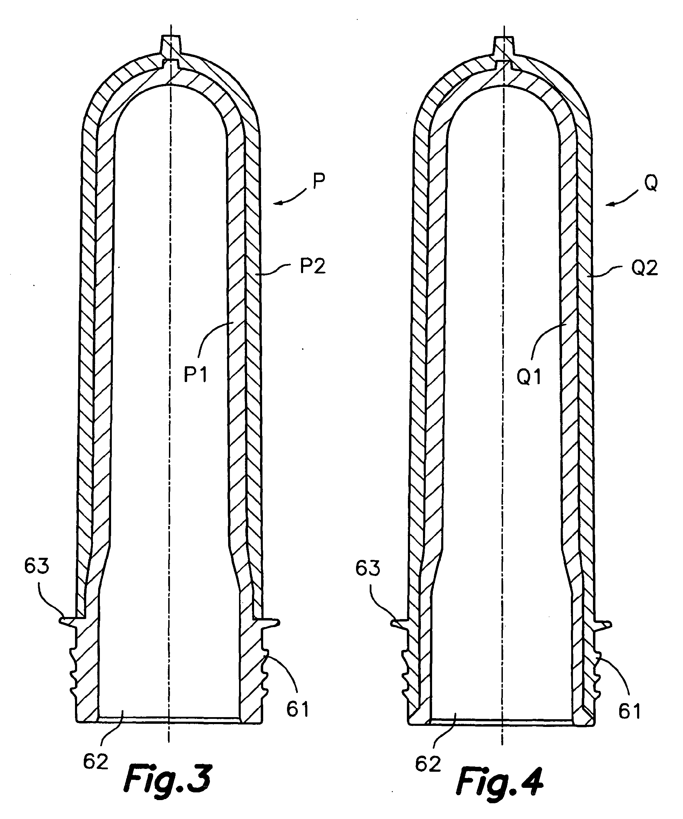

With reference first to Figure 1, it shows an apparatus for the production of bimaterial hollow bodies by means of injection overmoulding according to a simpler embodiment of the invention. In the embodiment of Figure 1, the mentioned hollow body is a first type of bimaterial pre-form P shown in longitudinal section in Figure 3.

The bimaterial pre-form of Figure 3 comprises a hollow body of plastic material in the form of test tube having a mouth 62 and a neck 61 with an external threading and a perimetric ring-shaped flange 63. These pre-forms P are intended for the subsequent production of plastic bottles by blowing. In the blowing process, the part in the form of test tube is inflated until adopting the form of the hollow body of a vessel or container, whereas the neck 61, the mouth 62 and the perimetric ring-shaped flange 63 are unchanged. The bimaterial pre-form P is formed by a first layer P1 of a base moulding material, for example, virgin PET and a second layer P2 of a coating material, for example, recovered or recycled PET, applied by overmoulding on said first layer P1. In this example of Figure 3, the neck 61, the mouth 62 and the perimetric ring-shaped flange 63 are defined by the first layer P1. This means that a product contained in a container or vessel produced by blowing from this type of bimaterial pre-form P of Figure 3 will never come into contact with the second layer P2, thus preventing, for example, the recovered or recycled material forming the second layer P2 from being able to contaminate the product.

The apparatus of this embodiment comprises a fixed part, shown on the right of Figure 1, and a mobile part, shown on the left of Figure 1. In the fixed part there are arranged a base moulding cavity 1 and equidistant first and second end overmoulding cavities 2a, 2b on both sides of said base moulding cavity 1 in a transverse direction DT to the demoulding direction or longitudinal direction DL. A first hot channel 10 is connected to supply a base moulding material to the base moulding cavity 1 and a second hot channel 20 is connected to supply an overmoulding material to said end overmoulding cavities 2a, 2b. In the mentioned second hot channel 20, there is arranged a valve 21 adapted to alternately allow or interrupt the passage of overmoulding material towards one and the other of the first and second end overmoulding cavities 2a, 2b according to a cycle which will be explained below.

The mobile part comprises a base plate 30 on which there is mounted a core holder plate 32 having a formation of two cores 3 separated from one another by a distance equal to the distance between the base moulding cavity 1 and each of the first and second end overmoulding cavities 2a, 2b. The mentioned core holder plate 32 is actuated by conventional actuation means (not shown) to be moved alternately on said base plate 30 in said transverse direction DT between two positions. In a first position (shown in Figure 1) the cores 3 are aligned with a first set of cavities formed by the base moulding cavity 1 and the first end overmoulding cavity 2a. In a second position (not shown) the cores 3 are aligned with a second set of cavities formed by the base moulding cavity 1 and the second end overmoulding cavity 2b. The base plate 30 is in turn actuated to be moved in a longitudinal direction DL between a closed position (not shown), in which the cores 3 are introduced in said first or second sets of cavities, and an open position (shown in Figure 1), in which the cores 3 or groups of cores 3 are extracted from the first or second sets of cavities. The mobile part further includes ejecting means adapted to ejecting the overmoulded, i.e., finished, bimaterial pre-forms P only from those cores 3 which have been extracted from one of the first and second end overmoulding cavities 2a, 2b. In the embodiment shown in Figure 1, said ejecting means comprise two ejecting elements 4, each ejecting element 4 being associated to one of the cores 3. These ejecting elements 4 are connected to respective ejecting plates 40 actuated by actuation means (not shown) such that they can be moved independently and alternately between moulding and ejecting positions.

In the embodiment shown in Figure 1, each ejecting element 4 has the form of a bushing arranged around the corresponding core 3 and comprises an end ring-shaped surface 44 surrounding the core 3. In said moulding position (shown in relation to the core 3 opposite to the first end overmoulding cavity 2a in Figure 1), said end ring-shaped surface 44 of the ejecting element 4 is adjacent to the beginning of a mould surface of the core 3, and in the ejecting position (shown in relation to the core 3 opposite to the moulding cavity 1 in Figure 1), the end ring-shaped surface 44 of the ejecting element 4 is close to or beyond the free end of the core 3. In the movement between the moulding and ejecting positions, the end ring-shaped surface 44 of the ejecting element 4 makes contact with the bimaterial pre-form P and ejects it from the core 3. Furthermore, at least one part of the end ring-shaped surface 44 of each ejecting element 4 is adapted to act as a mould surface when the ejecting element 4 is in the moulding position and the base plate 30 is in the closed position.

To mould the externally threaded neck 61 of the bimaterial pre-form P, the apparatus comprises a half-mould holder plate 50 on which there is mounted a pair of half-moulds 5a, 5b adapted and actuated to be closed next to the opening of the base moulding cavity 1, and to be opened. The half-moulds 5a, 5b have corresponding inner surfaces forming a part of the mould, which are configured for moulding the neck 61 of the bimaterial pre-form P with the corresponding threading. Thus, when the base plate 30 is in the closed position, an inner surface of the base moulding cavity 1, an outer surface of the core 3, the mentioned end ring-shaped surface 44 of the ejecting element 4 and said inner surfaces of the half-moulds 5a, 5b are adapted to form a mould for moulding said first layer P1 of base moulding material of the bimaterial pre-form P, including the externally threaded neck 61 formed by the inner surfaces of the half-moulds 5a, 5b. An injection of moulding material through the first hot channel 10 forms the first layer P1 on the core 3 introduced in the base moulding cavity 1.

Then, the core 3 on which the first layer P1 has been moulded is extracted from the base moulding cavity 1 and then introduced in one of the first or second end overmoulding cavities 2a, 2b by combined movements of the base plate 30, the core holder plate 32 and the half-mould holder plate 50. Supposing that the core 3 is introduced in the first end overmoulding cavity 2a, in this new position, an inner surface of the first end overmoulding cavity 2a and an outer surface of the first layer P 1 of base moulding material arranged on the core 3 are adapted to form a mould for overmoulding the second layer P2. An injection of overmoulding material into the first end overmoulding cavity 2a through the second hot channel 20 produces the second layer P2 on the first layer P1 to complete the bimaterial pre-form P. To that end, the valve 21 has been previously placed in a position (shown in Figure 1) allowing the passage of overmoulding material only towards the first end overmoulding cavity 2a.

At the same time as the injection of overmoulding material into the first end overmoulding cavity 2a occurs, the first layer P1 of a new bimaterial pre-form P is moulded on the other core 3, which has been simultaneously introduced in the base moulding cavity 1, by means of a new injection of base moulding material through the first hot channel 10. Then, a movement of the base plate 30 in the longitudinal direction DL towards its open position extracts both cores 3 from the respective base moulding cavity 1 and first end overmoulding cavity 2a. A subsequent movement of the core holder plate 32 in the transverse direction DT on the base plate 30 aligns the core 3 recently extracted from the first end overmoulding cavity 2a with the base moulding cavity 1 and the core 3 recently extracted from the base moulding cavity 1 with the second end overmoulding cavity 2b. The finished bimaterial pre-form P is then ejected from the core 3 which has been aligned with the base moulding cavity 1 by a movement of the corresponding ejecting plate 40, and the valve 21 is placed in a position (not shown) allowing the passage of overmoulding material only towards the second end overmoulding cavity 2b. Then, a new movement of the base plate 30 in the longitudinal direction DL towards its closed position introduce the cores 3 in the base moulding cavity 1 and the second end overmoulding cavity 2b, respectively, and the half-moulds 5a, 5b are closed and arranged in a moulding position next to the mouth of the base moulding cavity 1. In this position, a new simultaneous injection of base moulding material into the base moulding cavity 1 through the first hot channel 10 and of overmoulding material into the second end overmoulding cavity 2b through the second hot channel 20 is performed. New combined movements of the base plate 30, the core holder plate 32 and the half-mould holder plate 50 extract the cores 3 from the respective base moulding cavity 1 and second end overmoulding cavity 2b and again align them respectively with the first end overmoulding cavity 2a and the base moulding cavity 1. The finished bimaterial pre-form P is then ejected from the core 3 which has been aligned with the base moulding cavity 1 by a movement of the corresponding ejecting plate 40, and the valve 21 is again placed in the position allowing the passage of overmoulding material only towards the first end overmoulding cavity 2a, a situation shown Figure 1. From this point, the cycle can be repeated indefinitely to produce bimaterial pre-form P.

The ejecting operation of the bimaterial pre-form Q is preferably carried out when the corresponding core is in a centered position in relation to the base plate to prevent torques and to facilitate the collection of the ejected hollow bodies. In this embodiment of Figure 1, the ejecting operation is carried out when the corresponding core 3 is aligned with the base moulding cavity 1, i.e., after the extraction of the cores 3 and after its movement in the transverse direction DT.

For a person skilled in the art of moulds and injection moulding apparatuses, it will be obvious that the apparatus previously described in relation to Figure 1 allows multiple variants and can be applied to the production of other types of bimaterial pre-forms or to bimaterial hollow bodies other than the bimaterial pre-form P.

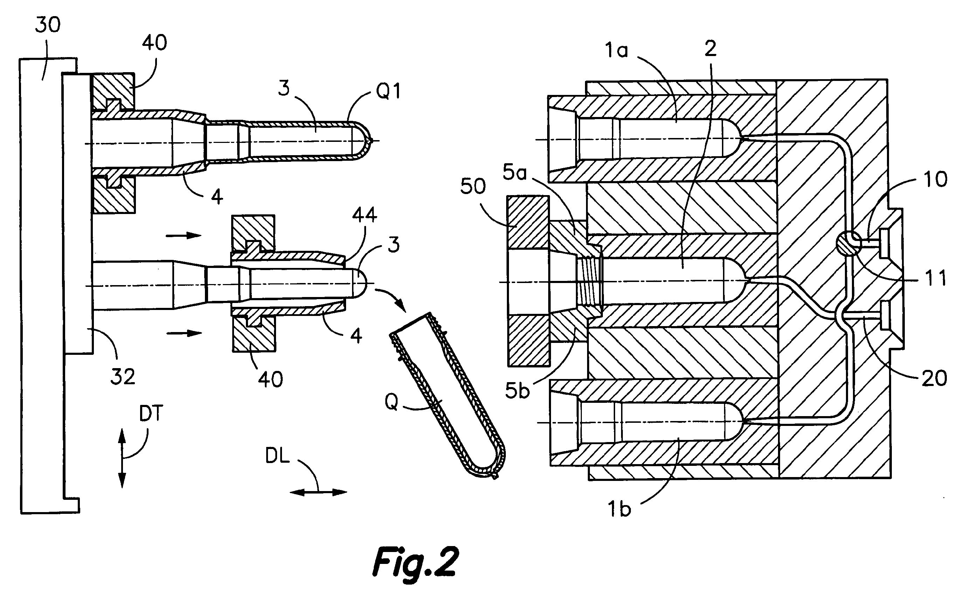

Figure 2 shows another embodiment which is a variant of that described in relation to Figure 1 and the same reference numbers are used to describe identical or equivalent elements. In the fixed part of the apparatus of Figure 2, there are first and second end base moulding cavities 1a, 1b connected with the first hot channel 10, between which there is arranged an overmoulding cavity 2 connected with the second hot channel 20. A valve 11 is arranged in the first hot channel 10 to allow alternately the passage of base moulding material only towards one or the other of the mentioned first and second end base moulding cavities 1a, 1b. Here, the half-mould holder plate 5 with the pair of half-moulds 5a, 5b is arranged in relation to the single overmoulding cavity 2. The mobile part does not undergo variations with regard to that described in relation to Figure 1 and the injection and ejection cycle is also similar. However, in a first position (shown in Figure 2) the cores 3 are aligned with a first set of cavities formed by the first end base moulding cavity 1a and the overmoulding cavity 2. In a second position (not shown) the cores 3 are aligned with a second set of cavities formed by the overmoulding cavity 2 and the second end base moulding cavity 1b. The hollow body produced in this embodiment is a bimaterial pre-form Q shown in longitudinal section in Figure 4.

Figure 4 shows the mentioned bimaterial pre-form Q, which, like the bimaterial pre-form P of Figure 3, is formed by a first layer Q1 of a base moulding material and a second layer Q2 of a coating material. The difference is that here, the external threading of the neck 61 and the perimetric ring-shaped flange 63 are defined by the material of the second layer Q2. This geometry can be useful, for example, for the generation of a container with a layer of barrier material either inside (first layer Q1) or outside (second layer Q2), since in this example both layers cover the entire bimaterial pre-form Q and the container generated therefrom.

Thus, in the embodiment of Figure 2, an inner surface of the base moulding cavity 1a, 1b, an outer surface of the core 3 and the end ring-shaped surface 44 of the ejecting element 4 are adapted to form a mould for moulding the first layer Q1 of base moulding material, and an inner surface of the overmoulding cavity 2, an outer surface of the first layer Q1 of base moulding material and the mentioned inner surfaces of the half-moulds 5a, 5b are adapted to form a mould for overmoulding the second layer Q2 of overmoulding material, which includes here the externally threaded neck 61 formed by the inner surfaces of the half-moulds 5a, 5b.

The kinematic movement and the steps of the injection and ejection cycle are similar to those described above in relation to Figure 1, with the difference that the valve 11 alternates its positions to allow the passage of base moulding material through the first hot channel 10 towards one or the other of the first or second end base moulding cavities 1a, 1b and the bimaterial pre-form Q is ejected when the corresponding core is in a centered position aligned with the overmoulding cavity 2, i.e., after the extraction of the cores 3 and before the movement in the transverse direction DT.

Obviously, both in the embodiment shown in Figure 1 and that shown in Figure 2, the change of position of the valve 11, 21 and the ejection of the finished bimaterial pre-form P, Q can be carried out indifferently before or after the extraction of the cores 3 by a movement of the base plate 30 towards its open position and before or after the movement of the cores 3 towards their positions aligned with the cavities adjacent to the cavities from which they have been extracted. Obviously, both the valve 21 shown in Figure 1 and the valve 11 shown in Figure 2 are shown schematically and can be substituted with any other valve means adapted to carry out the same functions. Likewise, two half-mould holder plates 50 and two pairs of half-moulds 5a and 5b associated to the end cavities, either end base moulding cavities 1a, 1b or end overmoulding cavities 2, can be incorporated instead of the single central half-mould holder plate 50, although this involves a useless duplication of mechanisms.

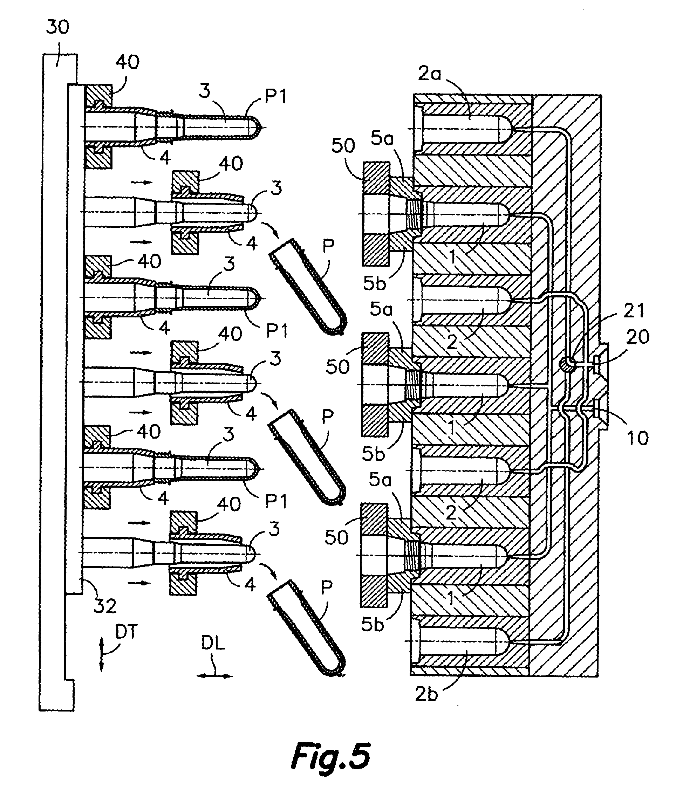

Figure 5 shows another embodiment which is a more complex version of the embodiment described above in relation to Figure 1, and the same reference numbers are used to describe identical or equivalent elements. The apparatus of the embodiment of Figure 5 is useful for producing pre-forms P of the type shown in Figure 3.

The apparatus of Figure 5 comprises a first hot channel 10 connected to supply a base moulding material to a number n (three in the example shown) of base moulding cavities 1 and a second hot channel 20 connected to supply an overmoulding material to a number n+1 (four in the example shown) of overmoulding cavities 2, 2a, 2b. The mentioned base moulding cavities 1 and said overmoulding cavities 2, 2a, 2b are alternately arranged in a formation along the transverse direction DT, with the particularity that the cavities located in the two ends of said formation are first and second end overmoulding cavities 2a, 2b, respectively. On a base plate 30 there is mounted a core holder plate 32 carrying a similar formation of a number 2n (six in the example shown) of cores 3. The core holder plate 32 is actuated to be moved alternately on the base plate 30 in a transverse direction DT between two positions in which the cores 3 are aligned respectively with first and second sets of cavities. Said first set of cavities is formed by said number n (three in the example shown) of base moulding cavities 1 and a number n (three in the example shown) of the overmoulding cavities 2, 2a including all the overmoulding cavities 2 arranged between the base moulding cavities 1 and the first end overmoulding cavity 2a. The mentioned second set of cavities is formed by said number n (three in the example shown) of base moulding cavities 1 and a number n (three in the example shown) of the overmoulding cavities 2, 2b including all the overmoulding cavities 2 arranged between the base moulding cavities 1 and the second end overmoulding cavity 2b. The base plate 30 is actuated to be moved in a longitudinal direction DL between a closed position, in which the cores 3 are introduced in said first or second sets of cavities, and an open position, in which the cores 3 are extracted from the first or second sets of cavities.

The apparatus also comprises valve means represented by a valve 21 arranged in said second hot channel 20 to alternately allow or interrupt the passage of overmoulding material towards the first and second end overmoulding cavities 2a, 2b according to the positions of the base plate 30 and of the core holder plate 32. The ejecting means are here adapted to eject the overmoulded hollow bodies P only from those cores 3 which have been extracted from overmoulding cavities 2, 2a, 2b. The ejecting means comprise a number 2n (six in the example shown) of ejecting elements 4 similar to those described above in relation to Figure 1, each ejecting element 4 being associated to one of the cores 3. The ejecting elements 4 are connected to respective ejecting plates 40 actuated independently and alternately. Each ejecting element 4 has the form of a bushing arranged around the corresponding core 3. The apparatus comprises half-mould holder plates 50 on which there are mounted a number n (three in the example shown) of pairs of half-moulds 5a, 5b, each pair of half-moulds 5a, 5b being adapted and actuated to be closed next to the opening of the base moulding cavities 1, and to be opened. The half-moulds 5a, 5b of each pair have corresponding inner surfaces forming a part of said mould for moulding the bimaterial pre-form P. More specifically, the half-moulds 5a, 5b are adapted for moulding the externally threaded neck 61.

In the apparatus of Figure 5, the mould for moulding the first layer P1 of base moulding material of each bimaterial pre-form P is formed by an inner surface of the corresponding base moulding cavity 1, the mentioned inner surfaces of the corresponding half-moulds 5a, 5b, an outer surface of the corresponding core 3, and the end ring-shaped surface 44 of the corresponding ejecting element 4. Therefore, the first layer P1 will include the externally threaded neck 61. The mould for overmoulding the second layer P2 of overmoulding material of each bimaterial pre-form P is formed by the inner surface of the corresponding overmoulding cavity 2, 2a, 2b and an outer surface of said first layer P1 of base moulding material formed on the corresponding core 3.

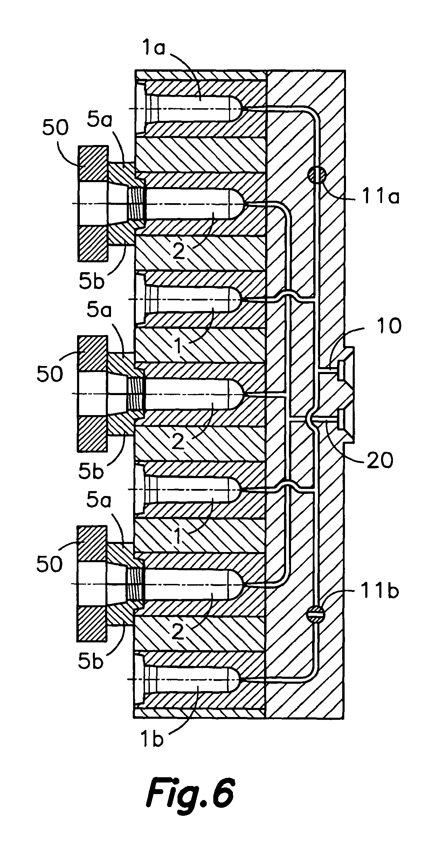

Figure 6 shows the fixed part of another alternative embodiment similar to that described in relation to Figure 5, but that is a more complex version of the embodiment described above in relation to Figure 2 instead of a version of the apparatus described in Figure 1. In other words, it is an apparatus similar to that described in relation to Figure 5 but adapted to produce bimaterial pre-forms Q such as that shown in Figure 4. In this case, the apparatus is provided with a first hot channel 10 connected to supply base moulding material to a number n+1 of base moulding cavities 1, 1a, 1b and a second hot channel 20 connected to supply overmoulding material to a number n of overmoulding cavities 2, with the particularity that the base moulding cavities 1, 1a, 1b and the overmoulding cavities 2 are arranged alternately in a formation along the transverse direction DT, and that the cavities located at the two ends of said formation are first and second end base moulding cavities 1a, 1b, respectively. In this case, the valve means are represented by a pair of valves 11a, 11b arranged in the first hot channel 10 to alternately allow or interrupt the passage of base moulding material towards the first and second end base moulding cavities 1a, 1b, according to the positions of the base plate 30 and core holder plate 32. The half-mould holder plates 50 on which there are mounted a number n of pairs of half-moulds 5a, 5b for moulding the threading of the outer part of the neck 61 of the bimaterial pre-form Q are associated to the openings of the overmoulding cavities 2. The mobile part (not shown) of this embodiment does not differ from that described above in relation to Figure 5.

It must be indicated that the arrangement of the two valves 11a and 11b shown in Figure 6 and the single valve 11, 21 shown in Figures 1, 2 and 5 are two different alternatives for the valve means indifferently applicable to any embodiment of the invention. The selection of one or the other will depend on factors such as the viscosity of the molten plastic material to be injected, machining ease, mechanical simplicity of the mould, etc. It must also be indicated that in both embodiments of Figures 5 and 6, the ejecting operations of the bimaterial pre-forms P, Q are preferably carried out when the corresponding cores 3 are aligned respectively with the base moulding cavities 1 or overmoulding cavities 2, i.e., when the corresponding cores 3 are in symmetrical positions in relation to the centre of the base plate 30.

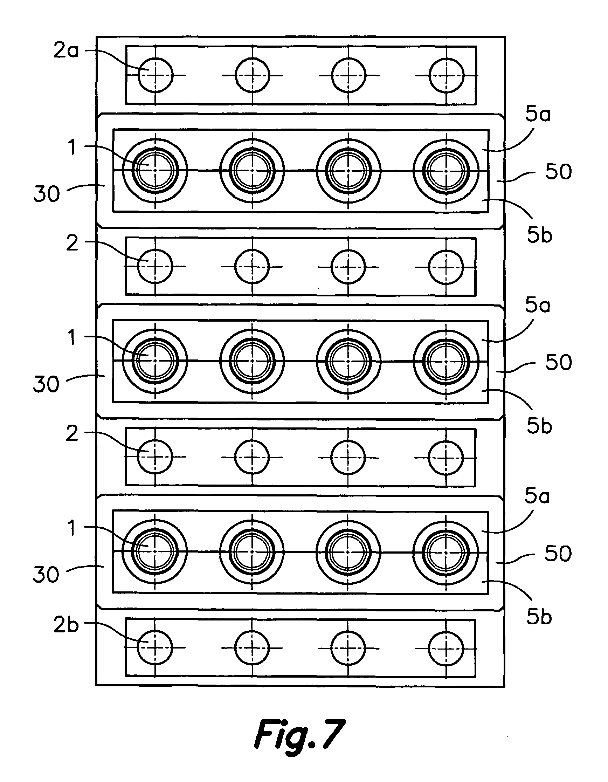

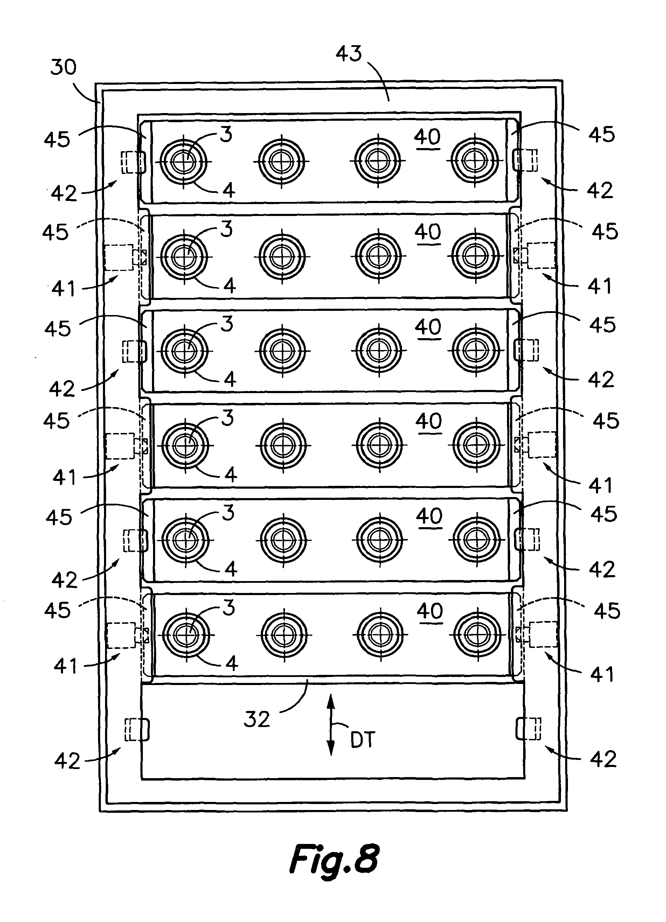

Figures 7 and 8 respectively show front views of the fixed part and the mobile part of an apparatus according to a variant of the embodiment of Figure 5, the object of which is to multiply the productivity. The only difference is that: where in Figure 5 there is a base moulding cavity 1, an overmoulding cavity 2, 2a, 2b or a pair of half-moulds 5a, 5b, in the embodiment of Figure 7 there is a row of base moulding cavities 1, a row of overmoulding cavities 2, 2a, 2b or a row of pairs of half-moulds 5a, 5b, respectively; and where in Figure 5 there is a core 3 with an ejecting element 4 associated thereto, in the embodiment of Figure 8 there is a row of cores 3 and a row of ejecting elements 4 associated thereto. In other words, Figure 5 could be a side longitudinal section view of the apparatus of the embodiment of Figures 7 and 8, where each row extends in a second transverse direction perpendicular to the mentioned transverse direction DT and has one and the same number m of equidistant elements. As a result, in the fixed part shown in Figure 7 there is a formation of cavities formed by a number n (three in the example shown) of rows of m (four in the example shown) base moulding cavities 1 and a number n+1 (four in the example shown) of rows of m (four in the example shown) overmoulding cavities 2, 2a, 2b. In the mobile part shown in Figure 8 there is a number 2n (six in the example shown) of rows of m (four in the example shown) cores 3.

All the pairs of half-moulds 5a, 5b of each row are mounted on a common half-mould holder plate 50, such that there is a number n of half-mould holder plates 50, as shown in Figure 7. All the rows of cores 3 are mounted on a single core holder plate 32 and the ejecting elements 4 of each row are linked to a common ejecting plate 40, such that there is a number 2n of ejecting plates 40, as shown in Figure 8. Adjacent to the base plate 30 there is arranged an actuation plate 43 in the form of a frame in which there are arranged first selecting elements 41 in positions coinciding with the positions of the rows of base moulding cavities 1, and in the base plate 30 there are mounted second selecting elements 42 in positions coinciding with the positions of the overmoulding cavities 2, 2a, 2b. The ejecting plates 40 have configurations 45 adapted to be coupled alternately with said first and second selecting elements 41, 42 according to the first and second positions adopted by the core holder plate 32 in relation to the base plate 30 as a result of its movements in the transverse direction DT. Thus, the first selecting elements 41 link the ejecting plates 40 to said actuation plate 43, which is actuated to move in a longitudinal direction DL driving the corresponding ejecting plates 40 and the rows of ejecting elements 4 associated thereto towards the ejecting position during each ejecting step. The second selecting elements 42 link the corresponding ejecting plates 40 and the rows of ejecting elements 4 associated thereto to the base plate 30, retaining them in the moulding position during each ejecting step.

A person skilled in the art will understand that an alternative embodiment (not shown) similar to that described in relation to Figures 7 and 8 but derived from the embodiment described above in relation to Figure 6 instead of a version of the apparatus described in Figure 5 is immediately feasible. In other words, an apparatus similar to that described in relation to Figures 7 and 8 but adapted to produce bimaterial pre-forms Q such as that shown in Figure 4. In this variant, the fixed part does not undergo variations in relation to that shown in Figure 8 for the purpose of carrying out ejecting operations when the corresponding cores 3 are in symmetrical positions in relation to the base plate 30. This has the additional advantage of allowing to adapt the apparatus for producing bimaterial pre-forms of the type P shown in Figure 3 or of the type Q shown in Figure 4 by simply exchanging the positions of the base moulding cavities 1 and the overmoulding cavities 2.

According to a variant of the embodiment described in relation to Figures 7 and 8, the apparatus of the invention incorporates multiple cavities and cores grouped into formations other than rows. For example, each row of cavities or cores can be substituted with a group of cavities or cores arranged according to a matrix formed by a number of columns and a number of rows, although other types of formations arranged, for example, in a staggered manner, are possible. Thus, where in Figure 7 there is a row of base moulding cavities 1, a row of overmoulding cavities 2, 2a, 2b or a row of pairs of half-moulds 5a, 5b in this variant there is a group of base moulding cavities 1, a group of overmoulding cavities 2, 2a, 2b or a group of pairs of half-moulds 5a, 5b, respectively. Similarly, where in Figure 8 there is a row of cores 3 and a row of ejecting elements 4 associated thereto in this variant there is a group of cores 3 and a group of ejecting elements 4 associated thereto.

All the pairs of half-moulds 5a, 5b of each group are mounted on a common half-mould holder plate 50, such that there is a number n of half-mould holder plates 50, and all the groups of cores 3 are mounted on a single core holder plate 32. The ejecting elements 4 of each group are linked to a common ejecting plate 40, such that there is a number 2n of ejecting plates 40, which are actuated selectively by an actuation plate in cooperation with first and second selecting elements 41, 42, in a manner similar to that described above in relation to Figure 8.

Obviously, a variant such as that described above incorporating groups of different elements of the rows but derived from the embodiment of Figure 2 for producing bimaterial pre-form Q of the type shown in Figure 4 instead of being derived from the embodiment shown in Figure 1 for producing bimaterial pre-form P of the type shown in Figure 3, is possible. Likewise, it is obvious that any of the embodiments described above are applicable to the production of other types of bimaterial hollow bodies different from the pre-forms, such as, for example, lids, caps, glasses, containers, etc.

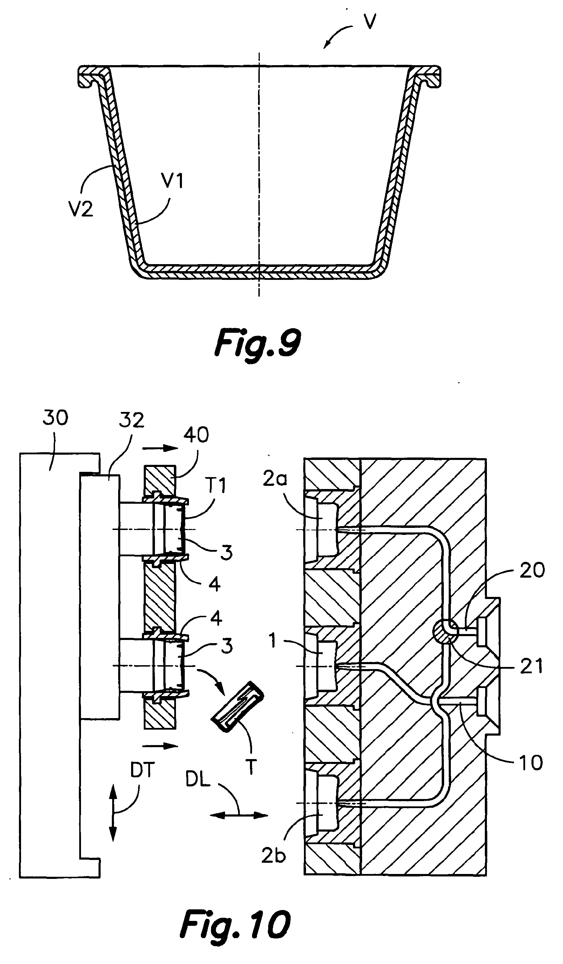

By way of example, Figure 9 shows a bimaterial vessel in the form of a cup V suitable for being manufactured by means of an apparatus according to any of the previously described embodiments. The bimaterial cup V is formed by a first layer V 1 of a base moulding material and a second layer V2 of a coating material. Given that the shapes of the first and second layers V1, V2 of the bimaterial cup V allow a direct demoulding thereof without needing to incorporate half-moulds adapted to be opened and closed, the half-moulds 5a, 5b and the half-mould holder plates 50 can be omitted.

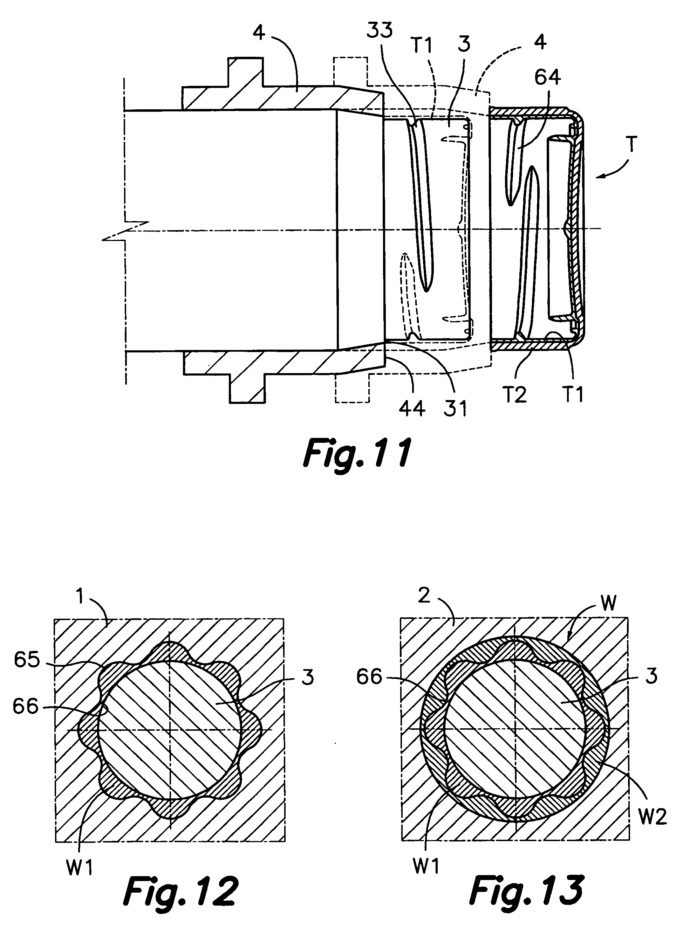

Figure 10 shows another embodiment of the apparatus of the invention applied to the production of bimaterial caps T. Figure 11 shows a cross-section of one of said bimaterial caps T, which is formed by a first layer T1 of base moulding material and a second layer T2 of overmoulding material. The apparatus of Figure 10 comprises a fixed part with a base moulding cavity 1 arranged between first and second end overmoulding cavities 2a. A first hot channel 10 is connected to supply base moulding material to the base moulding cavity 1 and a second hot channel 20 is connected to supply overmoulding material to the first and second end overmoulding cavities 2a, 2b. Valve means, such as a valve 21, are arranged to allow alternately the passage of overmoulding material to both of the first and second end overmoulding cavities 2a, 2b. The mobile part comprises a base plate 30 actuated to move in a longitudinal direction DL, a core holder plate 32 mounted on the base plate 30 and actuated to move in the transverse direction DT in relation thereto, a pair of cores 3 fixed to the core holder plate 32, a pair of ejecting elements 4, each associated to one of the cores 3, and a single ejecting plate 40 linked to the ejecting elements 4 and actuated to simultaneously move all the ejecting elements 4 in relation to the core holder plate 32 in a longitudinal direction DL. The kinematics of the base plate 30 and of the core holder plate 32 is the same as that describe above in relation to Figure 1.

The bimaterial cap T does not comprise any external threading or another outer configuration requiring half-moulds adapted to be closed and opened next to the opening of the base moulding cavities 1 or overmoulding cavities 2a, 2b, therefore such half-moulds are omitted. However, as shown in Figure 11, the first layer T1 of the bimaterial cap T defines an internal threading 64. The same Figure 11 shows the core 3 defining a part of mould for the inner surface of the first layer T1 including mould configurations 33 for said internal threading 64. The ejecting element 4 is adapted to eject the bimaterial cap T extracting the internal threading 64 from the mould configurations 33 of the core 3 by plastic deformation of the bimaterial cap T. In the apparatus of Figure 10, the mould for the first layer T1 is formed by an inner surface of the base moulding cavity 1, the outer surface of the core 3, and a ring-shaped surface provided by a step 31 (Figure 11) formed in the base of the core 3. The mould for the second layer T2 is formed by an inner surface of the first or second end overmoulding cavity 2a, 2b, an outer surface of the first layer T1 arranged on the core 3, and an end ring-shaped surface 44 of the corresponding ejecting element 4. As a result, the ejecting element 4 can be moved towards its ejecting position (shown in dotted lines in Figure 11) without interfering with the first layer T1 when it is arranged on the core 3. Figure 11 shows in dotted lines the first layer T1 when it is arranged on the core 3. However, when the ejecting element 4 is moved towards its ejecting position, the end ring-shaped surface 44 interferes with the second layer T2 of the bimaterial cap T formed on the core 3 to eject it from the core 3.

For this reason, in the embodiment of Figure 10 the two ejecting elements are linked to the same ejecting plate 40 and are shown in their ejecting positions. The ejecting element 4 associated to the core 3 opposite to the first end overmoulding cavity 2a has carried out its movement in the longitudinal direction DL without interfering with the first layer T1 arranged on the core 3. However, ejecting element 4 associated to the core 3 opposite to the moulding cavity 1 has carried out its movement in the longitudinal direction DL interfering with the second layer T2 adhered to the first layer T1, thus ejecting the finished bimaterial cap T from the core 3.

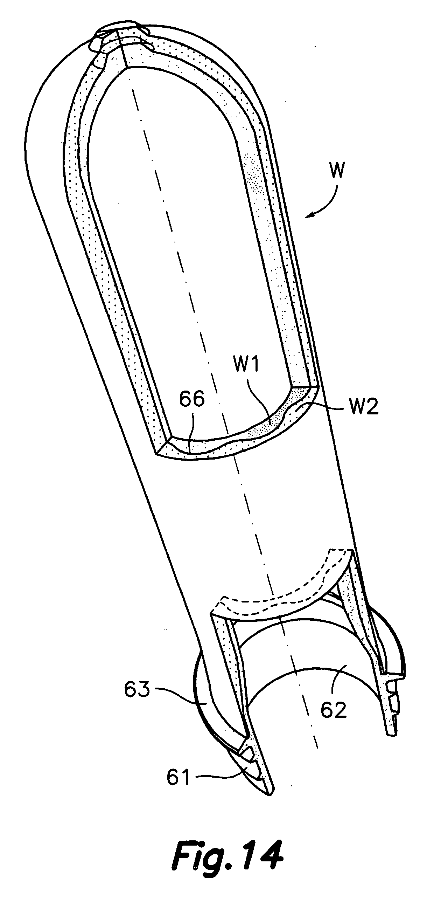

In the injection of bimaterial hollow bodies the thickness of the walls of the part is distributed between the two layers of plastic material. When the total thickness of a wall of the bimaterial body is relatively thin and the molten plastic material to be injected has a relatively high viscosity, a drawback may arise due to the fact that each of the two layers can be too thin for its injection to be carried out within suitable parameters. As a foresight to this drawback, Figures 12 and 13 show another embodiment of the apparatus of the invention adapted to produce a type of bimaterial hollow bodies W such as that shown in cross-section in Figure 14. The particularity of the embodiment of Figures 12 and 13 only affects the configuration of the base moulding cavities 1, 1a, 1b, and is compatible with any of the previously described embodiments of the apparatus of the invention.

Figure 12 shows a cross-section of one of the base moulding cavities 1 according to this embodiment. In a surface of the base moulding cavity 1, there are formed grooves 65 extending in the longitudinal direction DL or demoulding direction. These grooves 65 are arranged adjacent to one another and distributed in the entire perimeter of said base moulding cavity 1. In the example shown, the mentioned grooves 65 have rounded edges and are laterally connected to one another by means of also rounded edges, together defining a wavy cross-section profile. Evidently, other profiles different from that shown in Figures 12 and 13 are possible. Inside the base moulding cavity 1, there is shown inserted a corresponding core 3 having an outer mould surface suitable to the shape of an inner surface of the bimaterial hollow body W to be produced. Thus, between the mentioned inner surface of the base moulding cavity 1 and said outer surface of the core 3 there is formed a series of channels defined by said grooves 65. When the base moulding material is injected into the base moulding cavity 1, the molten plastic material flows favourably along said channels and also flows laterally from one channel to another, being easily joined to form a first layer W1, an outer surface of which reproduces negative grooves 66 corresponding to the mentioned grooves 65 of the cavity. The grooves 65 are configured and arranged in the base moulding cavity 1 to mould said corresponding negative grooves 66 on an area of the first layer W 1 provided to be opposite to an inner mould surface of said overmoulding cavity 2.

Figure 13 shows a cross-section of one of the overmoulding cavities 2 according to this embodiment, having a conventional inner surface. Inside the overmoulding cavity 2 there is shown inserted the corresponding core 3 with the first layer W1 as it has been previously moulded in the base moulding cavity 1. Thus, between the mentioned inner surface of the overmoulding cavity 2 and the outer surface of the first layer W1 there is formed a series of channels defined by said negative grooves 66. When the overmoulding material is injected into the overmoulding cavity 2, the molten plastic material flows favourably along said channels and also flows laterally from one channel to another, being easily joined to form a second layer W2, an outer surface of which reproduces the conventional shape defined by the inner surface of the overmoulding cavity 2.

Figure 14 shows bimaterial hollow body W obtained by means of the base moulding cavity 1 of the embodiment shown in Figures 12 and 13. The hollow body is in the form of a bimaterial pre-form W in which the first layer W1 defines the neck 61, the mouth 62 and the perimetric flange 63 and the second layer W2 is superposed on the first layer W1 only in the part in the form of a test tube adapted to be shaped as the body of the container by blowing. The first and second layers W1 and W2 have thicker longitudinal areas and thinner longitudinal areas alternating in the perimetric direction. The contact area of the first and second layers W1 and W2 is clearly delimited by the surface of the negative grooves 66 formed initially on the first layer W1.

A person skilled in the art will understand that the base moulding cavity 1 with grooves 65 described in relation to Figures 12 and 13 is applicable to any apparatus for the production of bimaterial hollow bodies by means of injection overmoulding, provided that such apparatus is provided with at least one of said base moulding cavities 1 and at least one core 3 insertable therein for the base moulding of a first layer W1 of said bimaterial hollow body W, and at least one overmoulding cavity 2 and at least one core 3 insertable therein with said first layer W1 arranged on the core 3 for overmoulding a second layer W2 of the bimaterial hollow body W on the first layer W1.

A method for the production of bimaterial hollow bodies by means of injection overmoulding using an apparatus according to the embodiment of Figure 1 or any one of the embodiments and variants derived from the embodiment of Figure 1 comprises the following cyclic steps:
a) inserting the formation of cores 3 with the first layer of base moulding material moulded on the first half of the cores 3 in said second set of cavities, said first layer of base moulding material having been moulded on the mentioned second half of the cores 3 in a previous moulding cycle;
b) arranging said valve means 21 to allow the passage of overmoulding material towards the second end overmoulding cavity 2b or second end group of overmoulding cavities 2b;
c) simultaneously injecting base moulding material through said first hot channel 10 to the base moulding cavities 1 and overmoulding material through a second hot channel 20 to the overmoulding cavities 2, 2b;
d) extracting the formation of cores 3 from the second set of cavities with the first layer of base moulding material moulded on a second half of the cores 3 and finished bimaterial hollow bodies P, Q, T, V, W formed by the first layer of base moulding material and the second layer of overmoulding material moulded on said first half of cores 3;
e) moving the formation of cores 3 until aligning it with the first set of cavities;
f) ejecting the hollow body P, Q, T, V, W or hollow bodies P, Q, T, V, W from the first half of cores 3;
g) inserting the formation of cores 3 with the first layer of base moulding material moulded on said second half of the cores 3 in the first set of cavities;
i) arranging said valve means 21 to allow the passage of overmoulding material towards the first end overmoulding cavity 2a or first end group of overmoulding cavities 2a;
j) simultaneously injecting base moulding material through the first hot channel 10 to the base moulding cavities 1 and overmoulding material through said second hot channel 20 to the overmoulding cavities 2, 2a;
k) extracting the formation of cores 3 from the first set of cavities with the first layer of base moulding material moulded on the first half of the cores 3 and bimaterial hollow bodies P, Q, T, V, W formed by the first layer of base moulding material and the second layer of overmoulding material moulded on the second half of cores 3;
l) moving the formation of cores 3 until aligning it with the second set of cavities; and
m) ejecting the hollow body P, Q, T, V, W or hollow bodies P, Q, T, V, W from the second half of cores 3.

A method for the production of bimaterial hollow bodies by means of injection overmoulding using an apparatus according to the embodiment of Figure 2 or any one of the embodiments and variants derived from the embodiment of Figure 2 comprises the following cyclic steps:
a) inserting the formation of cores 3 with a first layer of base moulding material moulded on a first half of the cores 3 in said second set of cavities, said first layer of base moulding material having been moulded on the mentioned first half of the cores 3 in a previous moulding cycle;
b) arranging said valve means 11, 11a, 11b, to allow the passage of base moulding material towards the second end base moulding cavity 1b or second end group of base moulding cavities 1b;
c) simultaneously injecting base moulding material through the first hot channel 10 to the base moulding cavities 1, 1b and overmoulding material through a second hot channel 20 to the overmoulding cavities 2;
d) extracting the formation of cores 3 from the second set of cavities with the first layer of base moulding material moulded on a second half of the cores 3 and bimaterial hollow bodies P, Q, T, V, W formed by the first layer of base moulding material and the second layer of overmoulding material moulded on the first half of cores 3;
e) ejecting the hollow body P, Q, T, V, W or hollow bodies P, Q, T, V, W from the first half of cores 3;
f) moving the formation of cores 3 until aligning it with the first set of cavities;
g) inserting the formation of cores 3 with the first layer of base moulding material moulded on said second half of the cores 3 in the first set of cavities;
i) arranging said valve means 11, 11a, 11b to allow the passage of base moulding material towards the first end base moulding cavity 1a or first end group of base moulding cavities 1a;
j) simultaneously injecting base moulding material through the first hot channel 10 to the base moulding cavities 1, 1a and overmoulding material through said second hot channel 20 to the overmoulding cavities 2;
k) extracting the formation of cores 3 from the first set of cavities with the first layer of base moulding material moulded on the first half of the cores 3 and bimaterial hollow bodies P, Q, T, V, W formed by the first layer of base moulding material and the second layer of overmoulding material moulded on the second half of cores 3;
l) ejecting the hollow body P, Q, T, V, W or hollow bodies P, Q, T, V, W from the second half of cores 3; and
m) moving the formation of cores 3 until aligning it with the second set of cavities.

It will be understood that in both variants of the method, some steps can be carried out in an order different from that set forth above. For example, the steps of ejecting the hollow bodies and/or the steps of controlling the distribution of moulding or overmoulding material to the end cavities by means of the valve means can be carried out indifferently before or after the steps of moving the formation of cores in the transverse direction DT to align it with the following first or second sets of cavities.

In any of the embodiments of the invention, the base moulding cavities, overmoulding cavities and cores are provided with cooling fluid circuits of a conventional type, the description of which has been omitted and which allow suitably cooling the layers of moulding and overmoulding material.

A person skilled in the art will be able to introduce variations and modifications in the embodiments shown and described without departing from the scope of the invention as it is defined in the attached claims.

## Claims

1. An apparatus for the production of bimaterial hollow bodies by means of injection overmoulding, comprising:
- a first hot channel (10) connected to supply a base moulding material to a number n of base moulding cavities (1) or groups of base moulding cavities (1);
- a second hot channel (20) connected to supply an overmoulding material to a number n+1 of overmoulding cavities (2, 2a, 2b) or groups of overmoulding cavities (2, 2a, 2b),
wherein said base moulding cavities (1) or groups of base moulding cavities (1) and said overmoulding cavities (2, 2a, 2b) or groups of overmoulding cavities (2, 2a, 2b) are alternately arranged in a formation along a transverse direction (DT), and wherein the cavities or groups of cavities located at the two ends of said formation are first and second end overmoulding cavities (2a, 2b) or first and second end groups of overmoulding cavities (2a, 2b), respectively;
- a base plate (30) on which there is mounted a core holder plate (32) carrying a similar formation of a number 2n of cores (3) or groups of cores (3),
wherein said core holder plate (32) is actuated to be moved alternately on the base plate (30) in said transverse direction (DT) between two positions in which the cores (3) or groups of cores (3) are aligned respectively with first and second sets of cavities, each formed by said number n of base moulding cavities (1) or groups of base moulding cavities (1) and a number n of overmoulding cavities (2, 2a, 2b) or groups of overmoulding cavities (2, 2a, 2b) including one or the other of said first and second end overmoulding cavities (2a, 2b) or first and second end groups of overmoulding cavities (2a, 2b), respectively, and wherein said base plate (30) is actuated such that it can move in a longitudinal direction (DL) between a closed position, in which the cores (3) or groups of cores (3) are introduced in said first or second sets of cavities, and an open position, in which the cores (3) or groups of cores (3) are extracted from the first or second sets of cavities;
- valve means (21) arranged in said second hot channel (20) to alternately allow or interrupt the passage of overmoulding material towards the first and second end overmoulding cavities (2a, 2b) or first and second end groups of overmoulding cavities (2a, 2b), according to the positions of the base plate (30) and core holder plate (32); and
- ejecting means adapted to eject the finished hollow bodies (P, Q, T, V, W) only from those cores (3) or groups of cores (3) which have been extracted from overmoulding cavities (2, 2a, 2b) or groups of overmoulding cavities (2, 2a, 2b).

2. The apparatus according to claim 1, **characterized in that** said ejecting means comprise a number 2n of ejecting elements (4) or groups of ejecting elements (4), with each ejecting element (4) associated to one of the cores (3), said ejecting elements (4) or groups of ejecting elements (4) being connected to respective ejecting plates (40) actuated independently and alternately.

3. The apparatus according to claim 2, **characterized in that** each ejecting element (4) has the form of a bushing arranged around the corresponding core (3), and **in that** each mould for the base moulding of a hollow body (P, Q, T, V, W) is formed at least in part by an inner surface of one of the base moulding cavities (1), an outer surface of the core (3) inserted therein, and an end ring-shaped surface (44) of the corresponding ejecting element (4), and each mould for overmoulding a hollow body (P, Q, T, V, W) is formed at least in part by an inner surface of one of the overmoulding cavities (2, 2a, 2b) and an outer surface of a first layer of base moulding material moulded on the core (3) inserted therein, said first layer of base moulding material having been previously moulded in one of the base moulding cavities (1).

4. The apparatus according to claim 3, **characterized in that** it comprises one or more half-mould holder plates (50) on which there are mounted a number n of pairs of half-moulds (5a, 5b) or groups of pairs of half-moulds (5a, 5b), each pair of half-moulds (5a, 5b) being adapted and actuated to be closed next to the opening of the base moulding cavities (1) and to be opened, the half-moulds (5a, 5b) of each pair having corresponding inner surfaces forming a part of said mould for moulding a hollow body (P, Q, T, V, W).

5. The apparatus according to claim 4, **characterized in that** said hollow body (P, Q, T, V, W) is a bimaterial pre-form (P), and **in that** said inner surface of the base moulding cavity (1), said outer surface of the core (3), said end ring-shaped surface (44) of the ejecting element (4) and said inner surfaces of the half-moulds (5a, 5b) are adapted to form a mould for moulding said first layer (P1) of base moulding material of said bimaterial pre-form (P) including an externally threaded neck (61) formed by the inner surfaces of the half-moulds (5a, 5b), and said inner surface of the overmoulding cavity (2, 2a, 2b) and said outer surface of said first layer (P1) of base moulding material are adapted to form a mould for overmoulding a second layer (P2) of overmoulding material of the bimaterial pre-form (P).

6. The apparatus according to claim 1, **characterized in that** said number n of groups of base moulding cavities (1) is a number n of rows of base moulding cavities (1), said number n+1 of groups of overmoulding cavities (2, 2a, 2b) is a number n+1 of rows of overmoulding cavities (2, 2a, 2b) and said number 2n of groups of cores (3) is a number 2n of rows of cores (3).

7. The apparatus according to claim 1, **characterized in that** there are formed in an inner mould surface of each base moulding cavity (1) grooves (65) extending in a demoulding direction, said grooves (65) being adjacent to one another and distributed in the perimeter of said base moulding cavity (1), the grooves (65) being configured and arranged to mould corresponding negative grooves (66) on an area of the first layer (W1) of the hollow body (W) provided to be opposite to an inner mould surface of said overmoulding cavity (2, 2a, 2b).

8. The apparatus according to claim 7, **characterized in that** the mentioned grooves (65) have rounded edges and are laterally connected to one another by means of rounded edges defining a wavy cross section profile.

9. A method for the production of bimaterial hollow bodies by means of injection overmoulding using an apparatus with an arrangement of moulding cavities (1), overmoulding cavities (2, 2a, 2b), cores (3), valve means (21), and ejecting means (4, 40) as described in claim 1, **characterized in that** it comprises the steps of:
- alternately inserting the cores (3) in the corresponding first and second sets of cavities;
- simultaneously injecting the base moulding material in the moulding cavities (1) and the overmoulding material in the overmoulding cavities (2, 2a; 2, 2b) of the corresponding first and second sets of cavities;
- selectively controlling an alternating distribution of the overmoulding material to the end overmoulding cavities (2a, 2b) of that first or second set of cavities in which the cores (3) are inserted;
- extracting the cores (3) from the corresponding first or second set of cavities after each injection operation with a first layer of moulding material formed on a first half of the cores (3) and a finished hollow body (P, Q, T, V, W), formed by said first layer of moulding material and a second layer of overmoulding material, formed on a second half of the cores (3); and
- ejecting the finished hollow bodies (P, Q, T, V, W) from the cores (3) of said second half of cores (3).

10. The method according to claim 9, comprising the initial steps of:
- inserting said formation of cores (3) or groups of cores (3) in said first set of cavities;
- injecting base moulding material through a first hot channel (10) to the base moulding cavities (1);
- extracting the formation of cores (3) from said first set of cavities with the first layer of base moulding material moulded on the first half of the cores (3); and
- moving the formation of cores (3) until aligning it with said second set of cavities;
and then the cyclic steps of:
a) inserting the formation of cores (3) with the first layer of base moulding material moulded on the first half of the cores (3) in said second set of cavities;
b) arranging said valve means (21) to allow the passage of overmoulding material towards the second end overmoulding cavity (2b) or second end group of overmoulding cavities (2b);
c) simultaneously injecting base moulding material through said first hot channel (10) to the base moulding cavities (1) and overmoulding material through a second hot channel (20) to the overmoulding cavities (2, 2b);
d) extracting the formation of cores (3) from the second set of cavities with the first layer of base moulding material moulded on the second half of the cores (3) and finished bimaterial hollow bodies (P, Q, T, V, W) formed by the first layer of base moulding material and the second layer of overmoulding material moulded on the first half of cores (3);
e) moving the formation of cores (3) until aligning it with the first set of cavities;
f) ejecting the hollow body (P, Q, T, V, W) or hollow bodies (P, Q, T, V, W) from the first half of cores (3);
g) inserting the formation of cores (3) with the first layer of base moulding material moulded on the second half of the cores (3) in the first set of cavities;
i) arranging said valve means (21) to allow the passage of overmoulding material towards the first end overmoulding cavity (2a) or first end group of overmoulding cavities (2a);
j) simultaneously injecting base moulding material through the first hot channel (10) to the base moulding cavities (1) and overmoulding material through said second hot channel (20) to the overmoulding cavities (2, 2a);
k) extracting the formation of cores (3) from the first set of cavities with the first layer of base moulding material moulded on the first half of the cores (3) and bimaterial hollow bodies (P, Q, T, V, W) formed by the first layer of base moulding material and the second layer of overmoulding material moulded on the second half of cores (3);
l) moving the formation of cores (3) until aligning it with the second set of cavities; and
m) ejecting the hollow body (P, Q, T, V, W) or hollow bodies (P, Q, T, V, W) from the second half of cores (3).

11. The method according to claim 9, **characterized in that** it comprises selecting the base moulding material or the overmoulding material from a group including a recovered plastic material and a plastic barrier material, and configuring the base moulding cavities (1), the overmoulding cavities (2, 2a, 2b) and the cores (3) so that each of the first and second layers covers a delimited area of the hollow body (P, Q, T, V, W).

12. An apparatus for the production of bimaterial hollow bodies by means of injection overmoulding, comprising:
- a first hot channel (10) connected to supply a base moulding material to a number n+1 of base moulding cavities (1, 1a, 1b) or groups of base moulding cavities (1, 1a, 1b);
- a second hot channel (20) connected to supply an overmoulding material to a number n of overmoulding cavities (2) or groups of overmoulding cavities (2),
wherein said base moulding cavities (1, 1a, 1b) or groups of base moulding cavities (1, 1a, 1b) and said overmoulding cavities (2) or groups of overmoulding cavities (2) are alternately arranged in a formation along a transverse direction (DT), and wherein the cavities or groups of cavities located at the two ends of said formation are first and second end base moulding cavities (1a, 1b) or first and second end groups of base moulding cavities (1a, 1b), respectively;
- a base plate (30) on which there is mounted a core holder plate (32) carrying a similar formation of a number 2n of cores (3) or groups of cores (3),
wherein said core holder plate (32) is actuated to be moved alternately on the base plate (30) in said transverse direction (DT) between two positions in which the cores (3) or groups of cores (3) are aligned respectively with first and second sets of cavities, each formed by said number n of overmoulding cavities (2) or groups of overmoulding cavities (2) and a number n of the base moulding cavities (1, 1a, 1b) or groups of base moulding cavities (1, 1a, 1b) including one or the other of said first and second end base moulding cavities (1a, 1b) or first and second end groups of base moulding cavities (1a, 1b), respectively, and wherein said base plate (30) is actuated to be moved in a longitudinal direction (DL) between a closed position, in which the cores (3) or groups of cores (3) are introduced in said first or second sets of cavities, and an open position, in which the cores (3) or groups of cores (3) are extracted from the first or second sets of cavities;
- valve means (11, 11a, 11b) arranged in said first hot channel (10) to alternately allow or interrupt the passage of base moulding material towards the first and second end base moulding cavities (1a, 1b) or first and second end groups of base moulding cavities (1a, 1b), according to the positions of the base plate (30) and core holder plate (32); and
- ejecting means adapted to eject the finished hollow bodies (P, Q, T, V, W) only from those cores (3) or groups of cores (3) which have been extracted from overmoulding cavities (2) or groups of overmoulding cavities (2).

13. The apparatus according to claim 12, **characterized in that** said ejecting means comprise a number 2n of ejecting elements (4) or groups of ejecting elements (4), with each ejecting element (4) associated to one of the cores (3), said ejecting elements (4) or groups of ejecting elements (4) being connected to respective ejecting plates (40) actuated independently and alternately.

14. The apparatus according to claim 13, **characterized in that** each ejecting element (4) has the form of a bushing arranged around the corresponding core (3), and **in that** each mould for the base moulding of a hollow body (P, Q, T, V, W) is formed at least in part by an inner surface of one of the base moulding cavities (1, 1a, 1b), an outer surface of the core (3) inserted therein, and an end ring-shaped surface (44) of the corresponding ejecting element (4), and each mould for overmoulding a hollow body (P, Q, T, V, W) is formed at least in part by an inner surface of one of the overmoulding cavities (2) and by an outer surface of a first layer of base moulding material moulded on the core (3) inserted therein, said first layer of base moulding material having been previously moulded in one of the base moulding cavities (1, 1a, 1b).

15. The apparatus according to claim 14, **characterized in that** it comprises one or more half-mould holder plates (50) on which there are mounted a number n of pairs of half-moulds (5a, 5b) or groups of pairs of half-moulds (5a, 5b), each pair of half-moulds (5a, 5b) being adapted and actuated to be closed next to the opening of the overmoulding cavities (2) and to be opened, the half-moulds (5a, 5b) of each pair having corresponding inner surfaces forming a part of said mould for moulding a hollow body (P, Q, T, V, W).

16. The apparatus according to claim 15, **characterized in that** said hollow body (P, Q, T, V, W) is a bimaterial pre-form (Q), and **in that** said inner surface of the base moulding cavity (1, 1a, 1b), said outer surface of the core (3) and said end ring-shaped surface (44) of the ejecting element (4) are adapted to form a mould for moulding said first layer (Q1) of base moulding material of said bimaterial pre-form (Q), and said inner surface of the overmoulding cavity (2), said outer surface of said first layer (Q1) of base moulding material and said inner surfaces of the half-moulds (5a, 5b) are adapted to form a mould for overmoulding a second layer (Q2) of overmoulding material of the bimaterial pre-form (Q) including an outer part of an externally threaded neck (61) formed by the inner surfaces of the half-moulds (5a, 5b).

17. The apparatus according to claim 12, **characterized in that** said number n+1 of groups of base moulding cavities (1, 1a, 1b) is a number n+1 of rows of base moulding cavities (1, 1a, 1b), said number n of groups of overmoulding cavities (2) is a number n of rows of overmoulding cavities (2) and said number 2n of groups of cores (3) is a number 2n of rows of cores (3).

18. The apparatus according to claim 12, **characterized in that** there are formed in an inner mould surface of each base moulding cavity (1, 1a, 1b) grooves (65) extending in a demoulding direction, said grooves (65) being adjacent to one another and distributed in the perimeter of said base moulding cavity (1), the grooves (65) being configured and arranged to mould corresponding negative grooves (66) on an area of the first layer (W1) of the hollow body (W) provided to be opposite to an inner mould surface of said overmoulding cavity (2).

19. The apparatus according to claim 18, **characterized in that** the mentioned grooves (65) have rounded edges and are laterally connected to one another by means of rounded edges defining a wavy cross section profile.

20. A method for the production of bimaterial hollow bodies by means of injection overmoulding using an apparatus with an arrangement of base moulding cavities (1, 1a, 1b), overmoulding cavities (2), cores (3), valve means (11, 11a, 11b), and ejecting means (4, 40) as described in claim 12, **characterized in that** it comprises the steps of:
- alternately inserting the cores (3) in the corresponding first and second sets of cavities;
- simultaneously injecting the base moulding material in the base moulding cavities (1) and the overmoulding material in the overmoulding cavities (2, 2a; 2, 2b) of the corresponding first and second sets of cavities;
- selectively controlling an alternating distribution of the overmoulding material to the end base moulding cavities (1a, 1b) of that first or second set of cavities in which the cores (3) are inserted;
- extracting the cores (3) from the corresponding first or second set of cavities after each injection operation with a first layer of moulding material formed on a first half of the cores (3) and a finished hollow body (P, Q, T, V, W), formed by said first layer of moulding material and a second layer of overmoulding material, formed on a second half of the cores (3); and
- ejecting the finished hollow bodies (P, Q, T, V, W) from the cores (3) of said second half.

21. The method according to claim 20, comprising the initial steps of:
- inserting said formation of cores (3) or groups of cores (3) in said first set of cavities;
- arranging said valve means (11, 11a, 11b) to allow the passage of base moulding material towards the first end base moulding cavity (1a) or second end group of base moulding cavities (1a);
- injecting base moulding material through a first hot channel (10) to the base moulding cavities (1, 1a);
- extracting the formation of cores (3) from said first set of cavities with the first layer of base moulding material moulded on the first half of the cores (3); and
- moving the formation of cores (3) until aligning it with said second set of cavities;
and then the cyclic steps of:
a) inserting the formation of cores (3) with the first layer of base moulding material moulded on the first half of the cores (3) in said second set of cavities;
b) arranging said valve means (11, 11a, 11b) to allow the passage of base moulding material towards the second end base moulding cavity (1b) or second end group of base moulding cavities (1b);
c) simultaneously injecting base moulding material through the first hot channel (10) to the base moulding cavities (1, 1b) and overmoulding material through a second hot channel (20) to the overmoulding cavities (2);
d) extracting the formation of cores (3) from the second set of cavities with the first layer of base moulding material moulded on the second half of the cores (3) and bimaterial hollow bodies (P, Q, T, V, W) formed by the first layer of base moulding material and the second layer of overmoulding material moulded on the first half of cores (3);
e) ejecting the hollow body (P, Q, T, V, W) or hollow bodies (P, Q, T, V, W) from the first half of cores (3);
f) moving the formation of cores (3) until aligning it with the first set of cavities
g) inserting the formation of cores (3) with the first layer of base moulding material moulded on the second half of the cores (3) in the first set of cavities;
i) arranging said valve means (11, 11a, 11b) to allow the passage of base moulding material towards the first end base moulding cavity (1a) or first end group of base moulding cavities (1a);
j) simultaneously injecting base moulding material through the first hot channel (10) to the base moulding cavities (1, 1a) and overmoulding material through said second hot channel (20) to the overmoulding cavities (2);
k) extracting the formation of cores (3) from the first set of cavities with the first layer of base moulding material moulded on the first half of the cores (3) and bimaterial hollow bodies (P, Q, T, V, W) formed by the first layer of base moulding material and the second layer of overmoulding material moulded on the second half of cores (3);
l) ejecting the hollow body (P, Q, T, V, W) or hollow bodies (P, Q, T, V, W) from the second half of cores (3); and
m) moving the formation of cores (3) until aligning it with the second set of cavities.

22. The method according to claim 20, **characterized in that** it comprises selecting the base moulding material or the overmoulding material from a group including a recovered plastic material and a plastic barrier material, and configuring the base moulding cavities (1, 1a, 1b), the overmoulding cavities (2) and the cores (3) so that each of the first and second layers covers a delimited area of the hollow body (P, Q, T, V, W).
